# EUROPÄISCHE PATENTSCHRIFT

(11) **EP 0 542 322 B1**
(45) Veröffentlichungstag und Bekanntmachung des Hinweises auf die Patenterteilung: **10.07.1996**
(21) Anmeldenummer: 92202965.7
(22) Anmeldetag: 28.09.1992
(51) Int. Cl.: C22B 34/22, C01G 31/02

(54) **Verfahren zum Behandeln eines vanadiumhaltigen Rückstands**
Method for treating a vanadium containing residue
Procédé pour le traitement d'un résidu contenant du vanadium

(30) Priorität: 13.11.1991 DE 4137320; 23.04.1992 DE 4213328
(43) Veröffentlichungstag der Anmeldung: 19.05.1993
(73) Patentinhaber: METALLGESELLSCHAFT Aktiengesellschaft, D-60015 Frankfurt (DE); NORSK HYDRO TECHNOLOGY A.S., Oslo 2 (NO)
(72) Erfinder: Samant, Gurudas, Dr., W-3555 Fronhausen (DE); Higman, Christopher, W-6231 Schwalbach (DE); Krishnan, Venkita, W-6078 Neu-Isenburg 1 (DE); Sturm, Peter, W-6367 Karben (DE); Heidsieck, Klaus, D-25541 Brunsbüttel (DE); Kowallik, Wolfgang, D-25524 Itzehoe (DE)
(74) Vertreter: Rieger, Harald, Dr.

(56) Entgegenhaltungen:
- EP-A- 0 019 431
- EP-A- 0 441 209
- DE-A- 2 048 609
- DE-A- 2 430 132
- DE-A- 4 003 242
- DE-C- 948 739
- GB-A- 2 026 458
- US-A- 3 584 995
- US-A- 4 477 416
- CENTRAL PATENTS INDEX, BASIC ABSTRACTS JOURNAL Section Ch, Derwent Publications Ltd., London, GB; Class J, AN 77-50908 & JP-A-52 066 812 ( SAN-EI GUMI KK ) 2. Juni 1977 * Zusammenfassung *
- PATENT ABSTRACTS OF JAPAN vol. 8, no. 15 (C-206)21. Januar 1984 & JP-A-58 181 709 ( KAWASAKI SEITETSU KK ) 24. Oktober 1983 * Zusammenfassung *

## Beschreibung

Die Erfindung betrifft ein Verfahren zum Behandeln eines Vanadium enthaltenden Rückstands, der, wasserfrei gerechnet, zu mindestens 5 Gew.% aus Kohlenstoff besteht, wobei man den Rückstand in einem Ofen bei Temperaturen von 500 bis 1300°C thermisch behandelt.

Ein Verfahren dieser Art ist aus DE-A-20 48 609 bekannt. Dabei werden unter Sauerstoff-Zufuhr Temperaturen von 600 bis 1200°C erreicht und zumindest teilweise V₂O₅ erzeugt.

Bei dem zu behandelnden vanadiumhaltigen Rückstand kann es sich z.B. um Rückstände handeln, die in Raffinerien anfallen, insbesondere Petrolkoks oder asphaltreiche Rückstände. Ein weiteres Beispiel für einen solchen Rückstand ist der Ruß, der bei der partiellen Oxidation von Kohlenwasserstoffen entsteht und bei der Grobreinigung des durch die partielle Oxidation erzeugten Rohgases, z.B. in Form von Rußwasser, anfällt.

Der Erfindung liegt die Aufgabe zugrunde, ein vanadiumreiches Feststoffgemisch zu gewinnen, das für die metallurgische Weiterverarbeitung infrage kommt. Beim eingangs genannten Verfahren geschieht dies erfindungsgemäß dadurch, daß man den Rückstand im Ofen durch einen Bereich leitet, in welchem die Temperaturen oberhalb 700°C liegen, wobei der O₂-Partialdruck, gemessen in diesem vom Rückstand eingenommenen Bereich, höchstens 10⁻² bar beträgt und dabei die Bildung von V₂O₅ unterdrückt wird, und daß man aus dem Ofen ein Feststoffgemisch abzieht, das zu mindestens 5 Gew.% aus Vanadiumoxid besteht. Bei diesen Verfahrensbedingungen vermeidet man, störende Mengen an V₂O₅ zu erzeugen, die bei Temperaturen oberhalb von 700°C Agglomerationen und Anbackungen im Ofen bilden würden.

Es wurde gefunden, daß man bei Temperaturen im Bereich von 500 bis 1300°C bei einem O₂-Partialdruck von höchstens 10⁻² bar die Bildung von V₂O₅ unterdrückt und im wesentlichen nur VO₂ erzeugt, das in diesem Temperaturbereich nicht schmilzt. Dabei ist der O₂-Partialdruck innerhalb des vom Rückstand eingenommenen Bereichs, d.h. im Materialbett zu messen. Außerhalb des Bereichs, d.h. auch außerhalb des Materialbettes, kann der O₂-Partialdruck möglicherweise höher liegen. Im Temperaturbereich zwischen 500 und 700°C kann man unter oxidierender Atmosphäre arbeiten, wobei man die jeweils günstigste Fahrweise durch Versuche ermittelt. Man wird die Temperatur oder Temperaturen für die Behandlung bevorzugt so wählen, wie es die Reaktivität des Kohlenstoffs im Rückstand oder der Restkohlenstoffgehalt im erzeugten Feststoffgemisch verlangt.

Durch das Verfahren gelingt es, verschiedene vanadiumhaltige Rückstände von ihren brennbaren Bestandteilen weitgehend zu befreien und einen störungsfreien, kostengünstigen Ofenbetrieb zu ermöglichen. Es kann zweckmäßig sein, mindestens einen Teil des aus dem Ofen abgezogenen Feststoffgemisches in den Ofen zurückzuführen.

Die zu behandelnden Rückstände, insbesondere Feststoff-Rückstände, weisen üblicherweise in ihrer Trockensubstanz zu mindestens 20 Gew.% brennbare Bestandteile auf und sie bestehen zu mindestens 5 Gew.% aus Kohlenstoff. Dadurch wird die erfindungsgemäße thermische Behandlung auf einfache Weise möglich, wobei man im allgemeinen ohne Zusatzbrennstoff auskommt oder im Einzelfall nur geringe Mengen an Zusatzbrennstoff benötigt.

Die thermische Behandlung kann in verschiedenartigen Öfen durchgeführt werden. Empfehlenswert als Ofen ist der Etagenofen oder der Drehrohrofen, auch kann man in einem Wirbelschichtreaktor mit stationärer oder zirkulierender Wirbelschicht arbeiten. Der Etagenofen, der Drehrohrofen und der Wirbelschichtreaktor sind an sich bekannt, Einzelheiten sind in Ullmanns Encyklopädie der technischen Chemie, 4. Auflage, Band 3, Seiten 408-460, beschrieben.

Es kann sich empfehlen, dem Rückstand vor oder während der thermischen Behandlung mindestens ein Oxid, Hydroxid, Carbonat oder Chlorid von einem oder mehreren der Metalle Natrium, Calcium oder Eisen zuzugeben. Durch einen solchen Zuschlag kann man die Weiterverarbeitung des aus dem Ofen kommenden Feststoffgemischs in einem metallurgischen Prozeß erleichtern. Nur als Beispiel sei hier der Elektro-Reduktionsofen genannt, in welchem man beispielsweise Ferro-Vanadium erzeugt, ein für die Stahlherstellung nötiges Produkt. Ein Zuschlag kann auch die thermische Behandlung im Ofen erleichtern und optimieren. Ferner ist es möglich, den Rückstand vor der thermischen Behandlung mit oder ohne einen der zuvor genannten Zuschläge zu Granulat zu agglomerieren, z.B. durch Pelletieren oder Brikettieren.

Wenn sich der Rückstand in einem Abwasser befindet, ist es nötig, ihn daraus z.B. durch Filtration oder Zentrifugieren abzutrennen und dann vor der thermischen Behandlung vorzutrocknen. Für die Vortrocknung empfehlen sich Temperaturen von höchstens etwa 400°C, weil man bei höheren Temperaturen mit störender Staubbildung rechnen muß. Wenn der Rückstand im Etagenofen thermisch behandelt werden soll, bietet es sich an, die Trocknung eines wasserhaltigen Rückstands im oberen Bereich, d.h. im Einlaßbereich des Etagenofens, durchzuführen. Alternativ kann man auch mit zwei verschiedenen Ofentypen arbeiten, dabei z.B. den Etagenofen zum Vortrocknen verwenden und anschließend die thermische Behandlung im Wirbelschichtreaktor durchführen.

Ausgestaltungsmöglichkeiten des Verfahrens werden mit Hilfe der Zeichnung erläutert. Es zeigt:
- Fig. 1: eine erste Verfahrensvariante mit einem Etagenofen und
- Fig. 2: eine zweite Verfahrensvariante mit einer zirkulierenden Wirbelschicht.

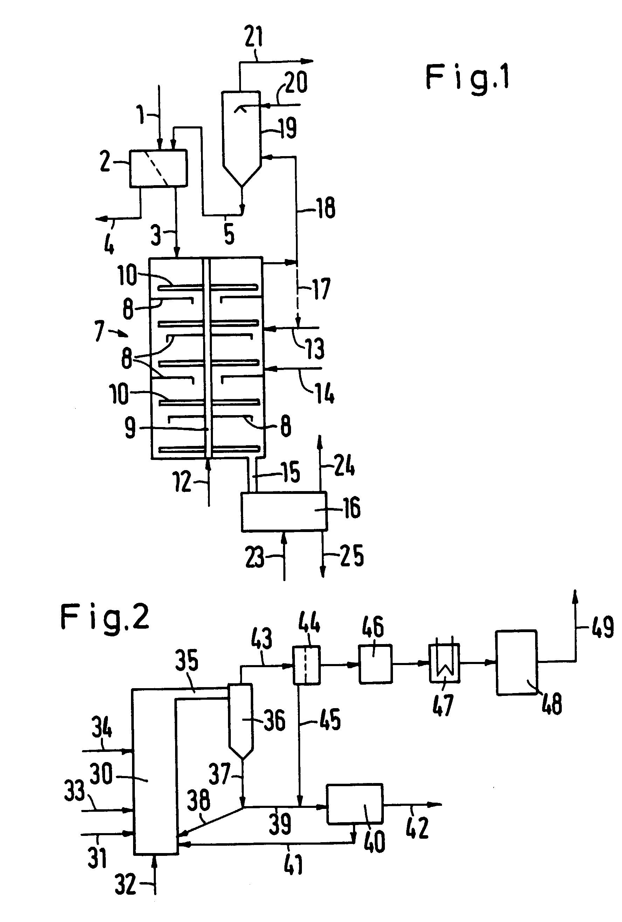

Beim Verfahren der Fig. 1 wird von einem rußhaltigen Abwasser, einem sogenannten Rußwasser, ausgegangen. Das Rußwasser fällt bei der partiellen Oxidation von Kohlenwasserstoffen, z.B. schweren Rückstandsölen, an, wobei man ein Rohgas erzeugt, das vor allem Wasserstoff, Kohlenoxide und Ruß enthält. Der Ruß wird durch Einsprühen von Wasser in das Rohgas abgetrennt und der vanadiumhaltige Ruß mit dem Wasser abgeführt.

In der Leitung (1) gibt man das Rußwasser einer Filtration (2) auf, wobei es zweckmäßig sein kann, ein Filterhilfsmittel, z.B. FeCl₃, Ca(OH)₂, Al₂(SO₄)₃ oder einen Polyelektrolyten, zuzugeben. Man erhält in der Leitung (3) einen Filterkuchen, der einem an sich bekannten Etagenofen (7) zugeführt wird. Das von Ruß befreite Wasser zieht man in der Leitung (4) ab.

Der Etagenofen (7) weist zahlreiche übereinander angeordnete, für die Feststoffe durchlässige Böden (8) auf. An einer vertikalen Hohlwelle (9) sind hohle Rührarme (10) befestigt, die beim Drehen der Hohlwelle (9) über den Böden (8) bewegt werden und die Feststoffe zu den Durchlässen in den Böden schieben. Sauerstoffhaltiges Gas, z.B. Luft, tritt durch die Leitung (12) zunächst in die Hohlwelle (9) ein und wird ggf. als Verbrennungsluft über die hohlen Rührarme (10) in die gewünschten Etagen geleitet. Zusätzliche Luft kann bei Bedarf jeder gewünschten Etage auch noch separat von außen zugeführt werden, in der Zeichnung sind hierfür die Leitungen (13) und (14) vorgesehen.

Der wasserhaltige, aus der Leitung (3) kommende Feststoff-Rückstand wird im oberen Bereich des Etagenofens (7) zunächst getrocknet, bevor dann bei steigender Temperatur in den darunterliegenden Etagen Verbrennung und Vergasungsreaktionen den Kohlenstoffgehalt des Rückstands weitgehend aufzehren. Eine vanadiumreiche Asche verläßt schließlich den Ofen (7) am unteren Ende durch den Kanal (15) und wird in einem Wirbelbettkühler (16) mit fluidisierender Luft aus der Leitung (23) gekühlt. Abluft wird in der Leitung (24) abgezogen und kann ebenfalls zum Naßwäscher (19) geführt werden. Gekühltes, vanadiumoxidhaltiges Feststoffgemisch steht in der Leitung (25) zur weiteren Verwendung zur Verfügung.

Es wird dafür gesorgt, daß im Etagenofen (7) bei Temperaturen von 400 bis 700°C unter oxidierender Atmosphäre bei einem O₂-Partialdurck von mindestens 10⁻⁴ bar gearbeitet wird und daß man im Temperaturbereich von 700 bis 1300°C bei einem O₂-Partialdruck von höchstens 10⁻² bar arbeitet. Dabei werden die O₂-Partialdrücke jeweils innerhalb des durch die Feststoffe gebildeten Bettes gemessen.

Ein Feststoffe enthaltendes Abgas zieht man in der Leitung (18) ab und leitet es zu einem Naßwäscher (19), z.B. Venturiwäscher, dem man durch die Leitung (20) Waschwasser zuführt. Das feststoffhaltige Waschwasser gibt man über die Leitung (5) der Filtration (2) auf. Das Abgas wird aus dem Wäscher (19) in der Leitung (21) abgezogen und kann z.B. einer nicht dargestellten Nachverbrennung zugeführt werden, insbesondere dann, wenn das Abgas CO enthält.

Die für den Betrieb des Etagenofens (7) notwendigen Regelungseinrichtungen, zu denen auch Temperaturmeßstellen und Anfahrbrenner gehören, sind an sich bekannt und wurden deshalb zur Vereinfachung weggelassen. Es kann zweckmäßig sein, einen Teil des Abgases in den Etagenofen zurückzuführen, wie das durch die gestrichelte Leitung (17) angedeutet ist.

Gemäß Fig. 2 gibt man einem Wirbelschichtreaktor (30) durch die Leitung (31) vanadiumhaltigen Rückstand, z.B. Petrolkoks, auf, der ein Wirbelbett aus Eisenoxid-Granulat enthält. Luft wird durch die Leitungen (32), (33) und (34) dem Reaktor (30) zugeführt. Ein Gas-Feststoff-Gemisch strömt durch den Kanal (35) zu einem Zyklon (36), in welchem die Feststoffe abgetrennt und zum Teil über die Leitungen (37) und (38) in den Reaktor zurückgeführt werden. Die restlichen Feststoffe gelangen durch die Leitung (39) zu einem Magnetscheider (40), wo das Eisenoxid abgetrennt und durch die Leitung (41) zurück in den Reaktor (30) gegeben wird. Das Produkt, das vanadiumoxidhaltige Feststoffgemisch, fällt in der Leitung (42) an.

Zur Behandlung des den Zyklon (36) in der Leitung (43) verlassenden Abgases steht zunächst ein Filter (44), z.B. mit porösen Keramikelementen, zur Verfügung. Abgeschiedene Feststoffe werden durch die Leitung (45) ebenfalls zum Magnetscheider (40) geführt. Das Abgas gelangt dann in eine Nachverbrennung (46), es wird in einem Abhitzekessel (47) gekühlt und dann einer Entschwefelung (48) unterzogen, bevor es durch den Kamin (49) in die Atmosphäre gelangt.

### Beispiele

In den Beispielen 1 und 2 wird ein Etagenofen mit 7 Etagen, einem Innendurchmesser von 1,1 m und einer gesamten Röstfläche von 5,8 m² verwendet, wie er im Prinzip in Fig. 1 dargestellt ist. Die Hohlwelle (9) wird mit Luft gekühlt. Der Etagenofen ist zum Aufheizen auf den Etagen 2, 4 und 6 (von oben gezählt) mit angeflanschten Erdgasbrennern ausgerüstet. Im Beispiel 3 wird mit einer zirkulierenden Wirbelschicht gearbeitet, wie sie Fig. 2 zeigt. Das Beispiel 1 ist ein Vergleichsbeispiel außerhalb des erfindungsgemäßen Verfahrens.

Die nachfolgende Tabelle gibt die Zusammensetzung (in Gew.%) des in jedem Beispiel erzeugten Feststoffgemisches an, das als Produkt gewonnen wird:

| | **Beispiel 1** | **Beispiel 2** | **Beispiel 3** |
|---|---|---|---|
| V₂O₅ | 75,6 | -,- | -,- |
| VO₂ | -,- | 44,3 | 70,8 |
| NiO | 7,6 | 4,6 | 2,2 |
| C (gesamt) | 0,1 | 0,6 | 1,2 |
| S (gesamt) | 0,2 | 0,8 | 0,1 |
| CaO | 1,2 | 0,8 | 0,9 |
| MgO | 0,7 | 0,5 | 0,6 |
| Al₂O₃ | 0,8 | 0,6 | 0,7 |
| K₂O | 1,0 | 0,7 | 1,1 |
| Na₂O | 0,5 | 0,3 | 0,4 |
| Fe₂O₃ | 5,6 | -,- | -,- |
| Fe₃O₄ | -,- | 41,6 | 14,8 |
| SiO₂ | 6,7 | 5,2 | 7,2 |

### Beispiel 1 (Vergleichsbeispiel)

Eine wäßrige Rußsuspension (Rußwasser), die beim Waschen eines rußhaltigen Synthesegases entsteht und 1,0 Gew.% Ruß enthält, wird durch eine Filterpresse geleitet. Der Filterkuchen hat folgende Zusammensetzung:
- Wasser: 80,6 Gew.%
- Ruß: 14,5 Gew.%
- Vanadium: 1,6 Gew.%
- Nickel: 0,4 Gew.%
- Sonstige: 2,9 Gew.%

Der leere Ofen wird aufgeheizt, bis in der Ofenmitte 600°C gemessen werden, dann werden ihm 30 kg/h Filterkuchen zugeführt. Die Anfahrbrenner bleiben so lange in Betrieb, bis bei einer Temperatur des Feststoffmaterials von 550°C eine selbstgängige Verbrennung erreicht ist. Bei der selbstgängigen Verbrennung des Filterkuchens werden pro Stunde 45 Nm³ Luft in den Ofen geleitet und auf die 7 Etagen verteilt, dabei hält man die Temperatur in der Ofenmitte bei 550 bis 570°C. Durch Sensoren wird der O₂-Partialdruck in den auf den Etagen befindlichen Materialbetten überwacht. Der 02-Gehalt im Abgas der Leitung (18) liegt bei 5 Vol.%, ein Teil des Abgases wird in den Ofen zurückgeführt. Zur Entstaubung dient ein Naßwäscher (19).

### Beispiel 2

Dem Etagenofen wird eine Mischung aus 300 kg Filterkuchen (vgl. Beispiel 1) und 15 kg feinkörnigem Eisenerz aufgegeben. Nach dem Aufheizen auf 750°C, gemessen in der Ofenmitte, führt man dem Ofen die Mischung in einer Rate von 35 kg/h zu. Die Anfahrbrenner, die man mit stöchiometrischer bis unterstöchiometrischer Verbrennung betreibt, werden bis auf den untersten Brenner abgeschaltet, wenn die Temperatur im Feststoffbett 800°C erreicht hat. Pro Stunde werden dem Ofen 38 Nm³ Luft zugeführt. Der CO-Gehalt im Abgas liegt zwischen 1,1 und 1,5 Vol.%, er ist ein Maß für den O₂-Mangel im Ofen. Nach Abschalten des letzten Anfahrbrenners wird die Temperatur in der Ofenmitte bei 700 bis 720°C gehalten.

### Beispiel 3

Als Ofen dient der Wirbelschichtreaktor (30) der Fig. 2, er hat einen Innendurchmesser von 0,2 m und eine Höhe von 6 m. Es wird ohne Abhitzekessel (47) und ohne Entschwefelung (48) gearbeitet.

Dem unteren Bereich des Reaktors werden über eine Dosierschnecke pro Stunde 15 kg Petrolkoks zugeführt, der Petrolkoks hat einen Aschegehalt von 57 Gew.%. In den unteren, mittleren und oberen Bereich des Reaktors leitet man zum Fluidisieren und teilweisen Verbrennen des Petrolkokses Luft ein. Inertes Bettmaterial in Form von körnigem Eisenoxid wird im Reaktor vorgelegt. Im stationären Zustand liegt der Sauerstoffpartialdruck im Wirbelbett des Reaktors zwischen 10⁻⁴ und 10⁻⁶ bar und die Temperatur bei 850°C. Ein Teil der im Zyklon (36) abgeschiedenen Feststoffe wird aus dem Verfahren abgezogen und zu einem Magnetscheider (40) geführt, wo Eisenoxid abgetrennt wird. Das Eisenoxid gibt man wieder dem Reaktor auf und behält das abgetrennte Feststoffgemisch als Produkt mit der in der obigen Tabelle angegebenen Zusammensetzung.

## Patentansprüche

1. Verfahren zum Behandeln eines Vanadium enthaltenden Rückstands, der, wasserfrei gerechnet, zu mindestens 5 Gew.% aus Kohlenstoff besteht, wobei man den Rückstand in einem Ofen bei Temperaturen von 500 bis 1300°C thermisch behandelt, dadurch gekennzeichnet, daß man den Rückstand im Ofen durch einen Bereich leitet, in welchem die Temperaturen oberhalb 700°C liegen, wobei der O₂-Partialdruck, gemessen in diesem vom Rückstand eingenommenen Bereich, höchstens 10⁻² bar beträgt und dabei die Bildung von V₂O₅ unterdrückt wird, und daß man aus dem Ofen ein Feststoffgemisch abzieht, das zu mindestens 5 Gew.% aus Vanadiumoxid besteht.

2. Verfahren nach Anspruch 1, dadurch gekennzeichnet, daß man das aus dem Ofen abgezogene Feststoffgemisch mindestens teilweise erneut dem Ofen aufgibt.

3. Verfahren nach Anspruch 1 oder 2, dadurch gekennzeichnet, daß man dem Rückstand vor oder während der thermischen Behandlung mindestens ein Oxid, Hydroxid, Carbonat oder Chlorid von einem oder mehreren der Metalle Natrium, Calcium oder Eisen zugibt.

4. Verfahren nach Anspruch 1 oder einem der folgenden, dadurch gekennzeichnet, daß man den Rückstand vor der thermischen Behandlung agglomeriert.

5. Verfahren nach Anspruch 1 oder einem der folgenden, dadurch gekennzeichnet, daß man den Rückstand vor der thermischen Behandlung vortrocknet.

6. Verfahren nach einem der Ansprüche 1 bis 5, dadurch gekennzeichnet, daß man als Ofen für die thermische Behandlung einen Etagenofen oder Drehrohrofen oder einen Wirbelschichtreaktor mit stationärer oder zirkulierender Wirbelschicht verwendet.

7. Verfahren nach einem der Ansprüche 1 bis 6, dadurch gekennzeichnet, daß man vanadiumhaltiges Rußwasser aus der Kühlung eines Rohgases aus der partiellen Oxidation von Kohlenwasserstoffen durch ein Filter leitet und den Filterkuchen als Feststoff-Rückstand dem Ofen zuführt.

## Claims

1. A method for treating a vanadium-containing residue which, calculated free of water, consists of at least 5% by weight carbon, wherein the residue is heat-treated in a furnace at temperatures of 500 to 1300°C, characterised in that in the furnace the residue is passed through a zone in which the temperatures are above 700°C, the O₂ partial pressure, measured in this zone occupied by the residue, being at most 10⁻² bar and in so doing the formation of V₂O₅ is suppressed, and that a solids mixture is removed from the furnace which consists of at least 5% by weight vanadium oxide.

2. A method according to Claim 1, characterised in that the solids mixture withdrawn from the furnace is at least partly recharged to the furnace.

3. A method according to Claim 1 or 2, characterised in that at least one oxide, hydroxide, carbonate or chloride of one or more of the metals sodium, calcium or iron is added to the residue before or during the heat treatment.

4. A method according to Claim 1 or one of the following claims, characterised in that the residue is agglomerated before the heat treatment.

5. A method according to Claim 1 or one of the following claims, characterised in that the residue is pre-dried before the heat treatment.

6. A method according to one of Claims 1 to 5, characterised in that a multiple-hearth furnace or rotary tube furnace or a fluidised bed reactor with stationary or circulating fluidised bed is used as a furnace for the heat treatment.

7. A method according to one of Claims 1 to 6, characterised in that vanadium-containing soot water from the cooling of a crude gas from the partial oxidation of hydrocarbons is passed through a filter and the filter cake is fed to the furnace as solids residue.

## Revendications

1. Procédé de traitement d'un résidu vanadifère qui, exprimé de manière anhydre, est constitué pour au moins 5% en poids de carbone, le résidu étant traité thermiquement dans un four à des températures de 500 à 1300°C, caractérisé en ce qu'il consiste à envoyer le résidu dans le four dans une partie dans laquelle les températures sont supérieures à 700°C, la pression partielle d'O₂ mesurée dans cette partie occupée par le résidu étant au plus de 10⁻² bar et la formation de V₂O₅ étant ainsi supprimée et à soutirer du four un mélange de matière solide constitué pour au moins 5% en poids d'oxyde vanadium.

2. Procédé suivant la revendication 1, caractérisé en ce qu'il consiste à charger le mélange de matière solide soutiré du four au moins partiellement à nouveau dans le four.

3. Procédé suivant la revendication 1 ou 2, caractérisé en ce qu'il consiste à ajouter au résidu avant ou pendant le traitement thermique au moins un oxyde, un hydroxyde, un carbonate on un chloride de l'un ou plusieurs des métaux que sont le sodium, le calcium ou le fer.

4. Procédé suivant la revendication 1 ou l'une des suivantes, caractérisé en ce qu'il consiste à agglomérer le résidu avant le traitement thermique.

5. Procédé suivant la revendication 1 ou l'une des suivantes, caractérisé en ce qu'il consiste à sécher le résidu avant le traitement thermique.

6. Procédé suivant l'une des revendications 1 à 5, caractérisé en ce qu'il consiste à utiliser comme four pour le traitement thermique un four à étage ou un four tubulaire rotatif ou un réacteur à lit fluidisé stationnaire ou circulant.

7. Procédé suivant l'une des revendications 1 à 6, caractérisé en ce qu'il consiste à faire passer dans un filtre de l'eau fuligineuse vanadifère provenant du refroidissement d'un gaz brut constitué par l'oxydation partielle d'hydrocarbures et à envoyer le gâteau de filtre comme résidu solide au four.
